# EUROPEAN PATENT SPECIFICATION

(11) **EP 3 247 776 B1**
(45) Date of publication and mention of the grant of the patent: **13.11.2019**
(21) Application number: 16736983.4
(22) Date of filing: 19.01.2016
(51) Int. Cl.: C10G 31/09, C10G 31/10

(54) **LTFT CATALYST FINES REMOVAL**
ENTFERNUNG VON LTFT-KATALYSATORTEILCHEN
ÉLIMINATION DES PARTICULES FINES D'UN CATALYSEUR LTFT

(30) Priority: 20.01.2015 ZA 201500385
(43) Date of publication of application: 29.11.2017
(73) Proprietor: The Petroleum Oil and Gas Corporation of South Africa (Pty) Ltd., 7500 Cape Town (ZA); L'Air Liquide Société Anonyme pour l'Etude et l'Exploitation des Procédés Georges Claude, 75321 Paris Cedex 07 (FR)
(72) Inventor: BRUESCHKE, Marc, 61348 Bad Homburg (DE); RUPPEL, Manfred, 63128 Dietzenbach (DE); MUSLERA, Eva Alonso, 68161 Mannheim (DE); SORAKER, Pal, N-7049 Trondheim (NO)
(74) Representative: Reitstötter Kinzebach
(86) International application number: PCT/ZA2016/050002
(87) International publication number: WO 2016/118982

(56) References cited:
- CN-U- 203 075 844
- US-A1- 2009 163 347
- US-A1- 2012 070 356
- US-B1- 6 808 634
- Kerafol: "Important notes on page 2 / back Ceramic Filter Disc 374 Ceramic Filter Disc 312 Ceramic Filter Disc 374 Ceramic Filter Disc 312 Ceramic Filter Disc 152 permeate ceramic membrane permeate channels Ceramic Filter Discs", , 27 June 2014 (2014-06-27), XP055313146, Retrieved from the Internet: URL:http://www.kerafol.com/fileadmin/user_ upload/Filterkeramik/produkte/filterkerami kscheiben/Datenblatt_Filterkeramikscheiben _EN.pdf [retrieved on 2016-10-21]
- Kerafol: "Dynamic Cross Flow Filtration Dynamic Cross Flow Filtration with with Ceramic Ceramic Membranes Membranes Dynamic Cross Flow Filtration with Ceramic Membranes", , 17 September 2014 (2014-09-17), XP055313144, Retrieved from the Internet: URL:http://www.kerafol.com/fileadmin/user_ upload/Filterkeramik/produkte/filterkerami kscheiben/Filter_Praesentation_100714.pdf [retrieved on 2016-10-21]
- Bokela: "The DYNO Filter", , 1 January 2009 (2009-01-01), XP055313141, Retrieved from the Internet: URL:http://www.bokela.com/uploads/media/DY N-prosp_e_05.pdf [retrieved on 2016-10-21]
- George G. Chase ET AL: "Filtration" In: "Kirk-Othmer Encyclopedia of Chemical Technology, Vol 7", 14 March 2003 (2003-03-14), John Wiley & Sons, XP055198619, ISBN: 978-0-47-123896-6 DOI: 10.1002/0471238961.0609122019220118.a01.pu b2, page 383 - page 388

## Description

### Technical field of the invention

This invention relates to a method to clean Low Temperature Fischer-Tropsch (LTFT) wax.

### Background to the invention

The inventor is aware of the presence of fine catalyst particles dispersed in LTFT wax after the wax has been separated from a LTFT reactor. The mixture inside the reactor normally comprises a mixture of hydrocarbons, mostly long chain hydrocarbon wax, gas and suspended solid catalyst particles. The catalyst is normally added to the reactor in a specific size range but, due to attrition the catalyst particle size inside the reactor range in size from its original size to fines. The wax is normally separated from the reactor mixture, including the catalyst by means of internal filters. The required filtration rate is high, which necessitates the filter pore sizes to be to be larger than some of the catalyst fines, which allows for catalyst fines to pass through the filter. Typically the size range from micron to sub-micron sizes and includes organometallic catalyst compounds. These fines cause plugging and/ or poisoning of downstream catalysts. High levels of metal fines are also not acceptable for food grade and cosmetic waxes.

Methods to reduce the levels of fines in LTFT wax include catalytic filtering as described in US 7,150,823, acid treatment as described in US 8,022,108, ion exchange treatment as described in US 2005/0004415, hydrothermal treatment to remove oxygenates including some metal oxides as described in WO 2006/005085, growing particles prior to filtration as described in WO 2006/053350, and an external filtration step to trap the fines in a filter mesh as described in EP 2 258 812.

The above methods to reduce the levels of fines in LTFT wax suffer from certain drawbacks. In US 7,150,823 catalytic filtering requires high temperatures up to 600°F and the exchange of deactivated catalyst. The acid treatment as described in US 8,022,108 requires the use of an additional aqueous process stream and produces a further waste stream. The ion exchange treatment as described in US 2005/0004415 requires regeneration of the ion exchange medium. Hydrothermal treatment to remove oxygenates including some metal oxides as described in WO 2006/005085 and growing particles prior to filtration as described in WO 2006/053350 introduces further chemical agents. The introduction of an external filtration step to trap the fines in a filter mesh as described in EP 2 258 812 requires cleaning of fouled mesh filters.

US 2012/0070356 A1 describes a process for separating liquid from a multiphase mixture using a cross-flow filter. US 6,808,634 B1 describes a process for cross-flow filtration with membranes.

It is an object of the invention to provide an efficient non-chemical method to remove most of the catalyst fines and organometallic catalyst compounds from LTFT wax, at least to levels below 25 wt-ppm.

### General description of the invention

According to the invention there is provided a method for removing Low Temperature Fischer-Tropsch (LTFT) catalyst fines and/or organometallic catalyst compounds from LTFT wax, downstream from the LTFT reactor, which includes more than one stage, each having the steps of:
causing a differential pressure across two or more filter elements in the form of a hollow cylinder with a porous filter surface or wall by feeding the wax mixture under pressure into a filter vessel with the hollow filter elements extending into the vessel, with the filtrate moving through the filter element out of the vessel;
causing high mechanical shearing and/ or centrifugal forces along and/ or away from the surface of the filter on the high pressure side of the filter to cause the particles to be continuously removed from the filter surface by rotating the filter elements at a high rpm relative to a generally stationary wax mixture and wherein each hollow filter element further includes a plurality of circular discs extending perpendicularly from the cylinder and being axially aligned with the cylinder with each disc being hollow with the hollow extending from the hollow of the cylinder and wherein, each vessel includes two or more rotating filter elements arranged such that the discs of adjacent filter elements overlap and wherein the spinning direction of the shafts are preferably in the same direction such that overlapping regions of filter elements move in opposite direction relative to each other to maximise shearing forces and turbulent flow;
wherein the differential pressure is selected to be sufficient to force flow of the wax across the filter to cause filtration; and
wherein the stages are arranged in series with the concentrated wax and catalyst mixture or retentate flowing downstream from one stage to another and finally from the last stage to a catalyst regeneration or processing unit.

Apart from turbulent cross flow and lateral shearing forces, centrifugal and centrifugal shearing forces opposite the filter flow direction is useful to move higher density particles away from the filter elements, while filter flow of the wax in the opposite direction is maintained by an appropriate transmembrane pressure. The transmembrane pressure is typically between about 1.5 and 6 bar, preferably 1.5 - 2 bar. The transmembrane pressure is defined as the difference between the filter vessel wax inlet pressure and the cleaned wax outlet pressure minus the centrifugal pressure created by the rotating filter elements.

The required shearing and/ or centrifugal forces are formed by rotating the filter elements in the wax mixture.

The filter elements may have pores smaller than the fine catalyst particles and organometallic catalyst compounds to be removed.

For each stage, the wax mixture is fed under pressure into a filter vessel with the hollow filter elements extending into the vessel, with the filtrate moving through the filter elements out of the vessel.

The hollow filter elements are rotated at a high rpm relative to a generally stationary wax mixture.

The filter elements are in the form of a hollow cylinder with a porous filter surface or wall and further have a plurality of circular discs extending perpendicularly from the cylinder and being axially aligned with the cylinder. Each disc is hollow with the hollow extending from the hollow of the cylinder.

Each stage or vessel includes two or more rotating filter elements arranged such that the discs of adjacent filter elements overlap. The spinning direction of the shafts are preferably in the same direction such that overlapping regions of filter elements move in opposite direction relative to each other to maximise shearing forces and turbulent flow.

In one embodiment, the filter elements may have a pore size of between about 20 and 40 nm, typically 30 nm created by TiO₂ coating on a ceramic base.

The permeate from all the stages are collected for further processing.

The stages are arranged in series with the concentrated wax and catalyst mixture or retentate flowing downstream from one stage to another and finally from the last stage to a catalyst regeneration or processing unit.

The number and sizes of the filter elements or stages are selected by minimizing the overall filter area required for a particular FT wax and its flow rate.

The filtration temperature is typically at about 150 °C with a differential pressure of about 2 bar applied to the filtration vessel.

Further disclosed herein is a stage unit for removing LTFT catalyst fines and organometallic catalyst compounds from LTFT wax, downstream from the LTFT reactor, which includes:
a filter vessel;
a filter element;
a differential pressure, in use, across a filter element;
a means for causing high mechanical shearing and/ or centrifugal forces along and/ or away from the surface of the filter on the high pressure side of the filter to cause the particles to be continuously removed from the filter surface; and
wherein the differential pressure is selected to be sufficient to force flow of the wax across the filter to cause filtration.

Further disclosed herein is a FT wax cleaning plant, downstream from a LTFT reactor, which plant includes at least one stage unit as described above.

### Detailed description of the invention

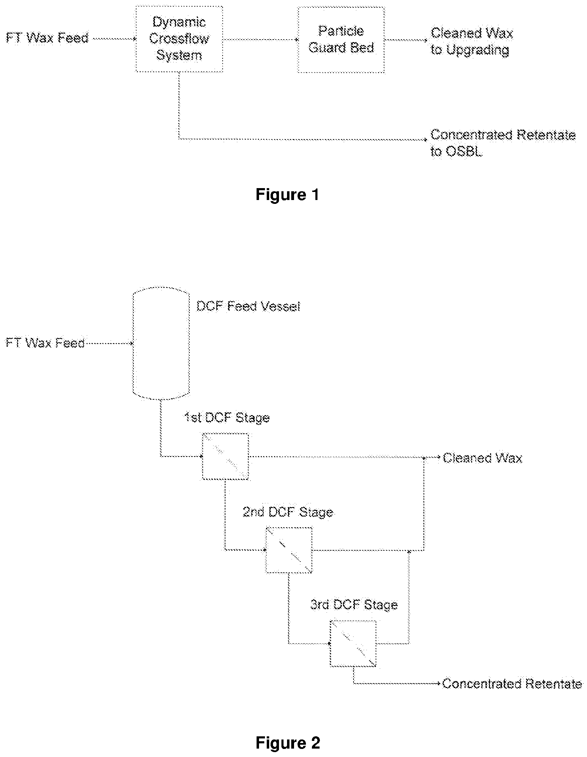

Figure 1 shows a possible layout of a wax treatment unit suitable for carrying out the method of the invention. The wax treatment unit may also include a centrifuge and particle guard beds and other process equipment.
Figure 2 shows a 3-stage unit suitable for carrying out the method of the invention.

Experimental trial runs were done on a laboratory scale using one stage of a Dynamic Cross Flow unit. The disc of the unit was rotated at 1200 RPM. The FT wax flow rate was between 0.5 kg/h and 4 kg/h depending on the catalyst concentration in the retentate resulting in a flux range of 15 - 116 kg/m2.h, with a 30 nm pore size membrane. The total membrane surface area was 0.034 m². The filtration temperature was 150°C with a pressure of 2 bar applied to the filtration vessel resulting in a transmembrane pressure of 1.8 bar. The test FT wax stream contained 600-750 wt-ppm catalyst. The retentate was concentrated up to 20% mass. A test with permeate recycle keeping the retentate concentration constant at 20% mass was maintained for 14 days. During this test the flux was kept constant at 15 kg/m².h. No solid particles or catalyst could be detected in the permeate using RFA analysis thereby maintaining a 100% filtration efficiency throughout the test with neither fouling nor abrasion observed.

## Claims

1. A method for removing Low Temperature Fischer-Tropsch (LTFT) catalyst fines and/or organometallic catalyst compounds from LTFT wax, downstream from the LTFT reactor, which includes more than one stage, each having the steps of:
causing a differential pressure across two or more filter elements in the form of a hollow cylinder with a porous filter surface or wall by feeding the wax mixture under pressure into a filter vessel with the hollow filter elements extending into the vessel, with the filtrate moving through the filter elements out of the vessel;
causing high mechanical shearing and/ or centrifugal forces along and/ or away from the surface of the filter on the high pressure side of the filter to cause the particles to be continuously removed from the filter surface by rotating the filter elements at a high rpm relative to a generally stationary wax mixture and wherein each hollow filter element further includes a plurality of circular discs extending perpendicularly from the cylinder and being axially aligned with the cylinder with each disc being hollow with the hollow extending from the hollow of the cylinder and wherein, each vessel includes two or more rotating filter elements arranged such that the discs of adjacent filter elements overlap and wherein the spinning direction of the shafts are preferably in the same direction such that overlapping regions of filter elements move in opposite direction relative to each other to maximise shearing forces and turbulent flow;
wherein the differential pressure is selected to be sufficient to force flow of the wax across the filter to cause filtration; and
wherein the stages are arranged in series with the concentrated wax and catalyst mixture or retentate flowing downstream from one stage to another and finally from the last stage to a catalyst regeneration or processing unit.

2. A method as claimed in Claim 1 wherein the transmembrane pressure is between 1.5 and 6 bar.

3. A method as claimed in Claim 2 wherein the transmembrane pressure is between 1.5 - 2 bar.

4. A method as claimed in any one of claims 1 to 3 wherein the filter elements have pores smaller than the fine catalyst particles to be removed.

5. A method as claimed in any one of claims 1 to 4 wherein the filter elements have a pore size of between 20 and 40 nm created by TiO₂ coating on a ceramic base.

## Patentansprüche

1. Verfahren zum Entfernen von Niedertemperatur-Fischer-Tropsch (LTFT) -Katalysatorteilchen und/oder organometallischen Katalysatorverbindungen aus LTFT-Wachs stromabwärts des LTFT-Reaktors, das mehr als eine Stufe umfasst, die jeweils die folgenden Schritte aufweisen:
Erzeugen eines Differenzdrucks über zwei oder mehr Filterelemente in Form eines Hohlzylinders mit einer porösen Filteroberfläche oder -wand durch Zuführen des Wachsgemisches unter Druck in einen Filterbehälter mit den hohlen Filterelementen, die sich in den Behälter erstrecken, wobei sich das Filtrat durch die Filterelemente aus dem Behälter bewegt;
Erzeugen hoher mechanischer Scher- und/oder Zentrifugalkräfte entlang und/oder weg von der Oberfläche des Filters auf der Hochdruckseite des Filters, um zu bewirken, dass die Partikel kontinuierlich von der Filteroberfläche entfernt werden, indem die Filterelemente mit einer hohen relativen Drehzahl relativ zu einem im Allgemeinen stationären Wachsgemisch gedreht werden, wobei jedes hohle Filterelement ferner eine Vielzahl kreisförmiger Scheiben umfasst, die sich senkrecht zum Zylinder erstrecken und axial zu dem Zylinder ausgerichtet sind, wobei jede Scheibe hohl ist, wobei der Hohlraum den Hohlraum des Zylinders übersteigt, und wobei jeder Behälter zwei oder mehr rotierende Filterelemente enthält, die derart angeordnet sind, dass sich die Scheiben benachbarter Filterelemente überlappen, wobei die Drehrichtung der Wellen vorzugsweise in der gleichen Richtung liegt, so dass sich überlappende Bereiche der Filterelemente in entgegengesetzter Richtung zueinander bewegen, um Scherkräfte und turbulente Strömung zu maximieren;
wobei der Differenzdruck so gewählt wird, dass er ausreicht, um das Fließen des Wachses durch den Filter zu erzwingen, um eine Filtration zu bewirken; und
wobei die Stufen in Reihe mit dem konzentrierten Wachs- und Katalysatorgemisch oder Retentat angeordnet sind, das stromabwärts von einer Stufe zu einer weiteren und schließlich von der letzten Stufe zu einer Katalysatorregenerierungs- oder -verarbeitungseinheit fließt.

2. Verfahren nach Anspruch 1, wobei der Transmembrandruck zwischen 1,5 und 6 bar liegt.

3. Verfahren nach Anspruch 2, wobei der Transmembrandruck zwischen 1,5 und 2 bar liegt.

4. Verfahren nach einem der Ansprüche 1 bis 3, wobei die Filterelemente Poren aufweisen, die kleiner sind als die zu entfernenden feinen Katalysatorteilchen.

5. Verfahren nach einem der Ansprüche 1 bis 4, bei dem die Filterelemente eine Porengröße zwischen 20 und 40 nm aufweisen, die durch TiO₂ - Beschichtung auf einer Keramikunterlage erzeugt wird.

## Revendications

1. Procédé de retrait de fines de catalyseur Fischer-Tropsch à basse température (LTFT) et/ou de composés catalyseurs organométalliques d'une cire LTFT, en aval du réacteur LTFT, qui comporte plus d'un étage, chacun ayant les étapes de :
induction d'une pression différentielle à travers au moins deux éléments filtrants sous la forme d'un cylindre creux avec une surface ou paroi filtrante poreuse par introduction du mélange cireux sous pression dans une cuve filtrante avec les éléments filtrants creux s'étendant à l'intérieur de la cuve, avec le filtrat se déplaçant à travers les éléments filtrants hors de la cuve ;
induction d'importantes forces de cisaillement mécanique et/ou centrifuges le long et/ou loin de la surface du filtre sur le côté haute pression du filtre pour faire en sorte que les particules soient retirées en continu de la surface filtrante par rotation des éléments filtrants à une vitesse de rotation élevée par rapport à un mélange cireux généralement stationnaire, et dans lequel chaque élément filtrant creux comporte en outre une pluralité de disques circulaires s'étendant perpendiculairement depuis le cylindre et étant alignés axialement avec le cylindre, chaque disque étant creux avec le creux s'étendant depuis le creux du cylindre, et dans lequel chaque cuve comporte au moins deux éléments filtrants rotatifs agencés de telle sorte que les disques d'éléments filtrants adjacents se chevauchent, et dans lequel la direction de rotation des arbres est de préférence dans la même direction de telle sorte que des régions d'éléments filtrants se chevauchant se déplacent dans une direction opposée l'une par rapport à l'autre pour maximiser les forces de cisaillement et l'écoulement turbulent ;
dans lequel la pression différentielle est sélectionnée pour être suffisante pour obliger la cire à s'écouler à travers le filtre pour induire une filtration ; et
dans lequel les étages sont agencés en série avec la cire concentrée et le mélange catalyseur ou le rétentat s'écoulant vers l'aval d'un étage à l'autre et finalement du dernier étage à une unité de régénération ou traitement de catalyseur.

2. Procédé selon la revendication 1 dans lequel la pression transmembranaire se situe entre 1,5 et 6 bar.

3. Procédé selon la revendication 2 dans lequel la pression transmembranaire se situe entre 1,5 et 2 bar.

4. Procédé selon l'une quelconque des revendications 1 à 3 dans lequel les éléments filtrants ont des pores plus petits que les particules fines de catalyseur à retirer.

5. Procédé selon l'une quelconque des revendications 1 à 4 dans lequel les éléments filtrants ont une taille de pores comprise entre 20 et 40 nm créée par un revêtement de TiO₂ sur une base en céramique.
